Europäisches Patentamt

European Patent Office

Office européen des brevets

(11) Publication number : **0 507 745 A2**

## (12) EUROPEAN PATENT APPLICATION

(21) Application number : **92830110.0**

(22) Date of filing : **10.03.92**

(51) Int. Cl.⁵ : **B60T 1/08, F02D 9/06**

(30) Priority : **13.03.91 IT TO910180**

(43) Date of publication of application :
**07.10.92 Bulletin 92/41**

(84) Designated Contracting States :
**DE ES FR GB IT SE**

(71) Applicant : **IVECO FIAT S.p.A.**
**Via Puglia 35**
**I-10156 Torino (IT)**

(72) Inventor : **Fenaroli, Guglielmo**
**Via Roma 10**
**I-24060 Tavernola Bergamasca (Bergamo) (IT)**

(74) Representative : **Notaro, Giancarlo et al**
**c/o Jacobacci-Casetta & Perani S.p.A. Via**
**Alfieri, 17**
**I-10121 Torino (IT)**

(54) **A control system for a hydraulic retarder for commercial vehicles and a vehicle with the system.**

(57)    A control system for a hydraulic retarder for commercial vehicles includes a hand control in a driving position of the vehicle for operating the retarder in steps. The system also includes a pedal control with two positions corresponding to the sequential operation of the retarder and of a device for creating an exhaust back-pressure.

FIG. 3

EP 0 507 745 A2

Jouve, 18, rue Saint-Denis, 75001 PARIS

The present invention relates to a control system for a hydraulic retarder for commercial vehicles, of the type including a hand control in a driving position of the vehicle for operating the retarder substantially in separate steps in dependence on the braking conditions of the vehicle.

As is well known, the function of retarders is to brake the motion of the vehicle when it is travelling downhill or when there are foreseeable obstacles or bends in the road, without overloading the service brakes. The advantages which can be achieved by the use of hydraulic retarders, such as, for example, the longer effective life of the service brakes because of reduced wear, are offset by the disadvantage that the large amount of heat produced during the operation of the retarder has to be dissipated, usually by the circulation of water from the air/water cooling system of the engine. If the retarder is operated over prolonged periods at high braking intensities (which correspond to high oil levels in the cavity in which, as is known, the rotor and stator of the retarder are disposed) the temperature of the water in the cooling system tends to be brought to dangerously high levels. In conventional retarders which have control systems with hand levers having five or more positions, a safety device warns the driver that the temperature of the cooling system is too high by means of a suitable indicator lamp and automatically switches off the retarder so that the deceleration of the vehicle is entrusted solely to the service brakes. The driver thus runs the risk of finding himself without the help of the retarder within a very short period of time.

The object of the present invention is to provide a control system for a hydraulic retarder of the type specified at the beginning of the description which does not have the aforesaid disadvantages and which is simple and cheap to produce.

According to the invention, this object is achieved by virtue of the fact that the control system includes a pedal control which is operable by the driver and can assume in sequence first and second positions corresponding to the operation of the retarder and of a device for creating an exhaust back-pressure on the engine of the vehicle, respectively.

By virtue of these characteristics, the vehicle can be braked differentially by the pedal control without the risk of the temperature of the cooling fluid of the engine being raised or the need for the oversizing of the cooling radiator at the design stage. In fact, the moving of the pedal to its first position causes the retarder to operate at a predetermined braking intensity which does not in any case correspond to an excessively high braking torque; further pressure on the pedal also operates a valve of known type, normally in the exhaust pipe, for creating an exhaust back-pressure.

In the case of secondary retarders, that is, retarders which are fitted downstream of the mechanical gearbox, the braking effect is independent of the rate of rotation of the engine; with a slow rate of rotation, the circulation of the cooling water may be insufficient to cool the retarder. The simultaneous use of the exhaust valve, which is well known to be more effective at fast rates of rotation, leads the driver to engage lower gear ratios, thus increasing the water circulation and keeping the temperature of the fluid in the cooling system at a safe value.

The hand control is preferably adapted to operate the retarder at higher braking intensities than those corresponding to the operation of the pedal control.

By virtue of this further characteristic, the remaining steps of the retarder which are not controlled by the operation of the pedal can be controlled by the driver by means of a lever which is positioned near the steering wheel so that he can operate it without removing his hand from the steering wheel. In this case, unlike known control systems, the control lever does not have fixed positions but returns freely to its zero position. The greatest braking power is thus used only for short periods (deceleration for bends, a narrowing of the road, etc.) and dissipation can thus be achieved by a normal cooling system.

Further advantages and characteristics of the control system according to the invention will become clear from the following detailed description provided purely by way of non-limiting example, with reference to the appended drawings, in which:

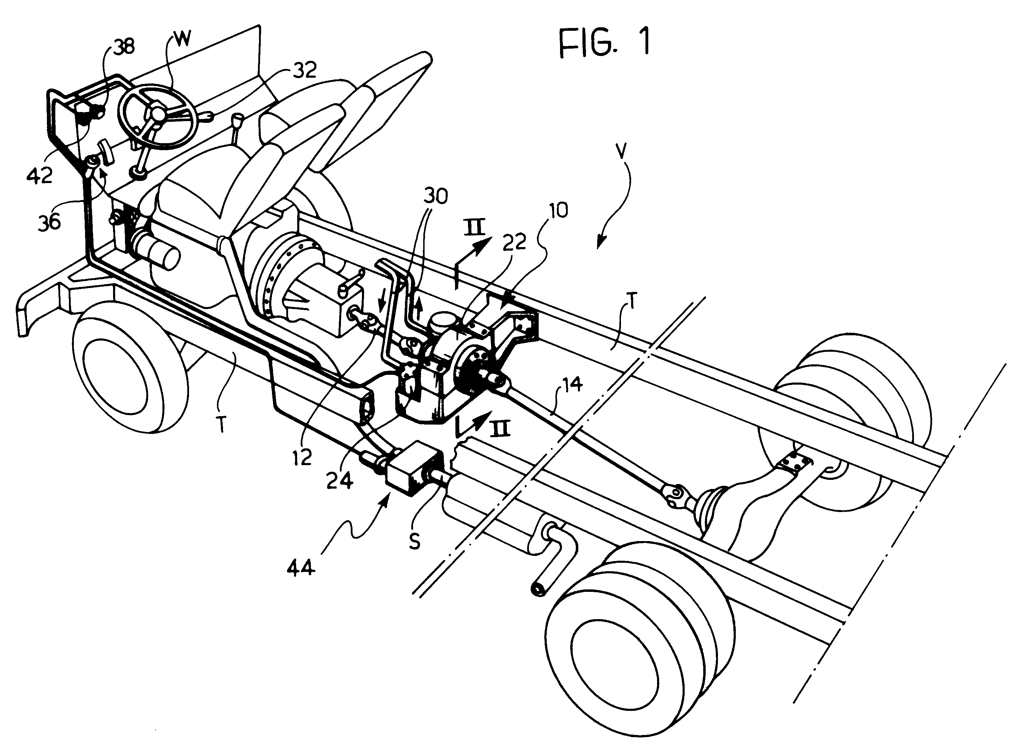

Figure 1 is a schematic perspective view of a control system according to the invention associated with a commercial vehicle,

Fiugure 2 is a section taken on the line II-II of Figure 1,

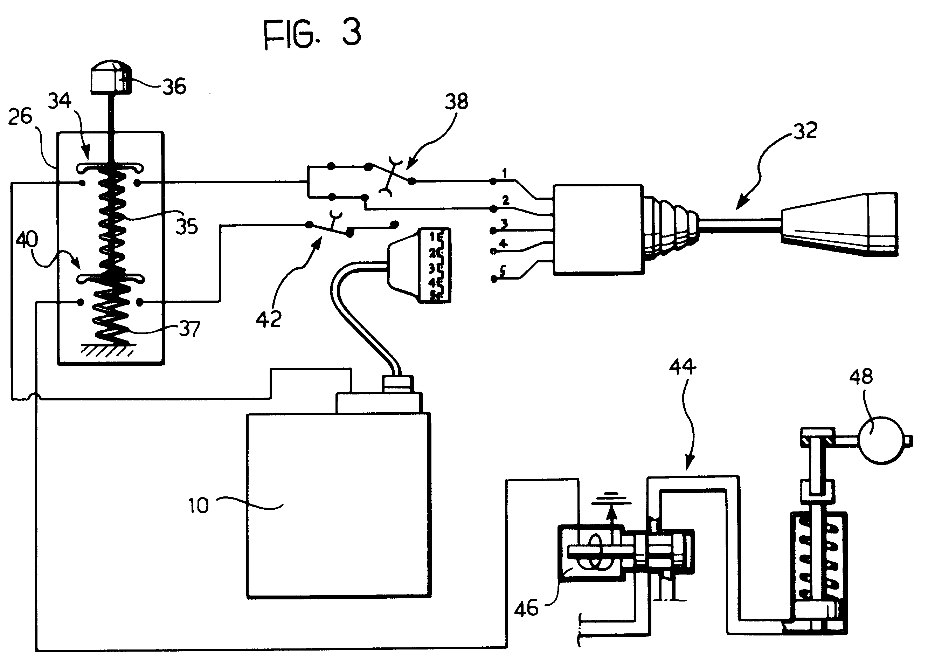

Figure 3 is a schematic view of the electrical circuit of the control system of Figure 1, and

Figure 4 is a view similar to Figure 3 showing another embodiment of the control system according to the invention.

With reference to the drawings, a secondary hydraulic retarder, generally indicated 10, is supported by the chassis T of a commercial vehicle V and is interposed between a shaft 12 of the gearbox and a propeller shaft 14.

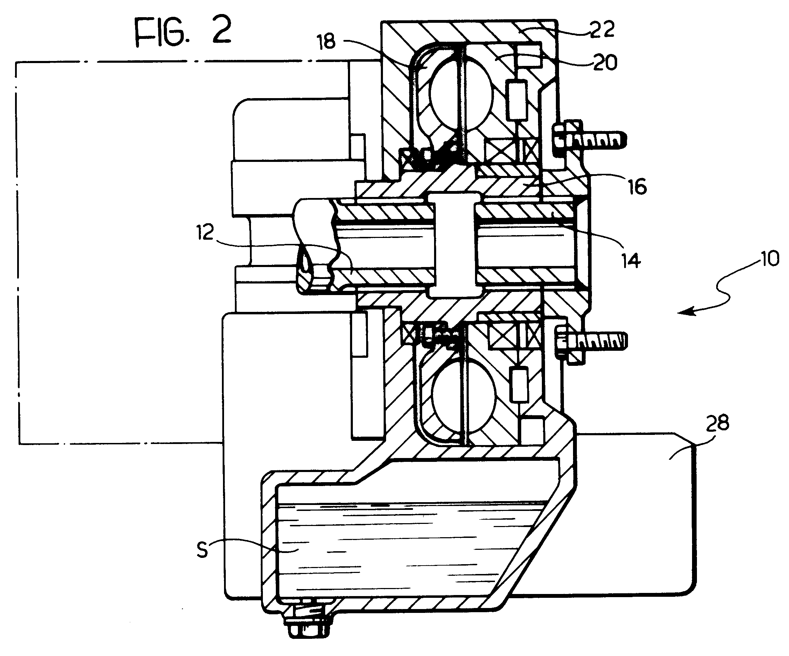

In known manner, the retarder 10, which is shown in detail in Figure 2, has a splined hub 16 which is coupled for rotation with the gearbox shaft 12 and the propeller shaft 14 and has a rotor 18 facing a stator 20 fixed to a housing 22 of the retarder. A proportional pressure-modulating solenoid valve 24 connected to a compressed-air source supplies oil from a lower reservoir S to the cavity defined between the rotor 18 and the stator 20 to predetermined oil levels which correspond to different braking intensities. A water/oil heat exchanger, indicated 28 in the drawings, cools the retarder 10 and is connected to the engine cooling system by pipes 30.

The solenoid valve 24 which operates the retarder 10 is connected electrically to a control lever 32 near the steering wheel W with the interposition of a first electrical switch 34 which forms part of a control unit 26 operable by a pedal 36, and an auxiliary switch 38 whose function will become clear from the following description.

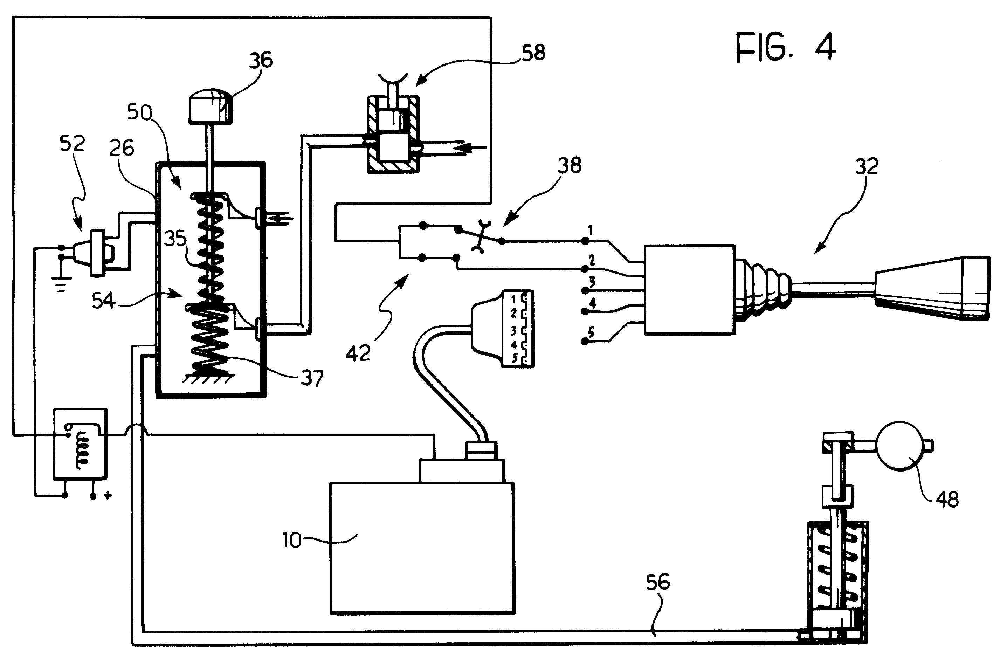

The control unit 26 may be pneumatic instead of electric (Figure 4). In this case, a normally-open pressure switch 52 is disposed downstream of a first pneumatic switch 50 for conversion from the pneumatic system to the electrical system. A pneumatic pipe 56 downstream of a second pneumatic switch 54 supplies the control obturator of an exhaust throttle valve 48 directly, a pneumatic switch 58 being interposed for preventing its operation.

When the lever 32 is in a zero positon, the first two stages of the operation of the retarder 10 can be activated by the first switch 34 associated with the pedal 36; the auxiliary push-button 38 on the vehicle's dashboard enables the driver to modulate the initial intervention of the retarder to two different braking intensities in dependence, for example, on the condition of the road surface.

A second electrical switch 40 of the control unit 35 (which corresponds to the pneumatic switch 54 of the version with pneumatic control) is operable in sequence with the first switch 34 by virtue of the presence of two springs 35 and 37 of different stiffnesses interposed respectively between the movable contacts of the switches and between the movable contact of the second switch 40 and the body of the operating unit 26. With the consent of a safety switch 42, also on the vehicle's dashboard, (corresponding to the pneumatic switch 58 of the version with pneumatic control) the second switch 40 operates a device 44 for creating an exhaust back-pressure. The device 44 comprises a pneumatic solenoid valve 46 inserted in the exhaust pipe S and the obturator of the throttle 48. The remaining stages of the retarder 10 are operated by the movement of the lever 32 to unstable positions, that is, positions which require continuous action by the driver to keep the lever in the desired position. The safety switch 42 enables the exhaust back-pressure device 44 to be prevented from operating regardless of the operating force on the pedal 36, for example, when road-holding is poor.

In the operative condition of the control system, whenever it is necessary to operate the retarder 10, the driver operates the pedal 36 on the floor of the cab of the vehicle V just like the control pedal of a conventional engine brake. The gentle operation of the pedal 36 to a first position corresponding to the closure of the first electric switch 34 simultaneously operates, for example, the first two stages of the retarder 10 so that the braking power used is not such as to upset the equilibrium of heat exchange in the vehicle's cooling system, even if the use of the retarder 10 is prolonged. The second position of the pedal 36, which corresponds to its firmer operation and the closure of both the electric contacts 34 and 40, provides additional engine braking by the closure of the exhaust throttle valve 48. The remaining stages of the retarder 10 for increased braking are activated by the control lever 32.

Naturally, it is intended that, the principle of the invention remaining the same, the details of construction and forms of embodiment may be varied widely with respect to those described and illustrated in the drawings, without thereby departing from the scope of the present invention.

For example, the control system according to the invention may be used on a primary hydraulic retarder, that is, a retarder between the clutch and the mechanical gearbox of the vehicle. Moreover, the system can of course also be used for secondary retarders which are connected directly to the vehicle's gearbox.

## Claims

1. A control system for a hydraulic retarder for commercial vehicles, of the type including a hand control in a driving position of the vehicle for operating the retarder substantially in separate steps in dependence on the braking conditions of the vehicle, characterised in that it includes a pedal control (36) which is operable by the driver and can assume in sequence first and second positions corresponding to the operation of the retarder (10) and of a device (44) for creating an exhaust back-pressure on the engine of the vehicle (V), respectively.

2. A control system according to Claim 1, characterised in that the hand control (32) is adapted to operate the retarder (10) at braking intensities greater than those corresponding to the operation of the pedal control (36).

3. A system according to Claim 2, characterised in that the hand control comprises a lever (32) which can assume a plurality of unstable operating positions, the lever (32) returning to a zero position when it ceases to be operated.

4. A system according to any one of the preceding claims, characterised in that it includes an auxiliary hand control (38) for preselecting the braking intensity of the retarder (10) corresponding to the operation of the pedal control (36) in dependence on the loading and/or travelling conditions of the vehicle V.

5. A system according to any one of the preceding claims, characterised in that it includes a safety hand control (42, 58) for preventing the operation of the the exhaust back-pressure device (44).

6. A system according to any one of the preceding claims, characterised in that the pedal control (36) includes an electrical switching device with a first electrical switch (34) associated with the retarder (10) and a second electrical switch (40) associated with the exhaust back-pressure device (44), the electrical switches (34, 40) being adapted to be closed in sequence against the action of biasing springs (35,37).

7. A system according to any one of Claims 1-5, characterised in that the pedal control (36) includes a pneumatic switching device with a first pneumatic switch (50) associated with the retarder (10) and a second pneumatic switch (54) associated with the exhaust back-pressure device (44), the pneumatic switches (50, 54) being adapted to be closed in sequence against the action of biasing springs.

8. A commercial vehicle with a control system according to any one of the preceding claims.

FIG. 1

FIG. 2

FIG. 3

FIG. 4